# EUROPEAN PATENT SPECIFICATION

(11) **EP 3 360 140 B1**
(45) Date of publication and mention of the grant of the patent: **20.11.2019**
(21) Application number: 16794930.4
(22) Date of filing: 07.10.2016
(51) Int. Cl.: G21C 17/10, G21C 17/108, G21C 19/20, G21F 5/005, G21F 5/14, G21F 9/30

(54) **DEVICE FOR DISPOSAL OF NEUTRON FLUX SENSORS AND/OR THERMOCOUPLES**
VORRICHTUNG ZUR ENTSORGUNG VON NEUTRONENFLUSSSENSOREN UND/ODER THERMOELEMENTEN
DISPOSITIF DE MISE AU REBUT DE CAPTEURS ET/OU DE THERMOCOUPLES À FLUX DE NEUTRONS

(30) Priority: 09.10.2015 CZ 20150713
(43) Date of publication of application: 15.08.2018
(73) Proprietor: Skoda JS a.s., 316 00 Plzen (CZ)
(72) Inventor: RUDOLF, Antonin, 326 00 Plzen (CZ); BENES, Vaclav, 330 11 Tremosna (CZ)
(74) Representative: Pavlica, Tomas
(86) International application number: PCT/CZ2016/000114
(87) International publication number: WO 2017/059833

(56) References cited:
- CA-A1- 2 432 268
- DE-A1- 3 935 645
- FR-A1- 2 707 418

## Description

### Technology field

The technical solution deals with device for disposal of neutron flux sensors and/or thermocouples used to determine power distribution in the active core of a nuclear reactor.

### Current state of the art

The neutron flux sensor, also technically called neutron flux measurement channel, is used to determine power distribution in the active core of a nuclear reactor by measuring neutron flux. Essentially, the neutron flux sensor is a small metal tube in which at least one measuring element or, frequently, a group of measuring elements of various length is placed to measure neutron flux at respective height, where the length of the neutron flux sensors depending on type reaches up to 12 meters. The thermocouple is designed in a similar way. Thermocouples are used to measure coolant temperature at the active core outlet. The neutron flux sensors or thermocouples (hereinafter jointly referred to as "sensors") are to be replaced if found out of order, and disposed of subsequently. However, considering that the sensors constitute an irradiated material showing considerable radioactivity, the disposal poses a great concern. At present, sensors are e.g. disposed of by means of a winding device, that winds the sensor being disposed of on a rotary mandrel and, after winding it completely, drops it down into a small rotary container inside the device. After filling up the device capacity, the container is emptied into a transport container. The main disadvantages of this device are as follows:
- Small capacity of the container for disposed of sensors;
- Long time required to dispose of one sensor;
- Difficult manipulation when inserting the sensor being disposed of into the device;
- Operator's intervention necessary when winding the sensor on the mandrel.

Document GB1437598 (A) describes the way of disposal of radioactive material based on the method of dividing materials by chip machining that is performed by cutting with a circular-saw blade. When cutting radioactive materials, the circular-saw blade is sprinkled with a liquid that conducts the produced chippings in to a can. The cut material itself drops into a package on the other side. The disadvantage of this method of disposal lies in the formation of a secondary radioactive waste that must be disposed of, especially the cooling liquid and the chippings produced by cutting.

Document CZ19961118 describes a shearing mechanism for nuclear device parts with a blade arranged on a cutting plate, where the subject to be divided must be clamped to the main plate before cutting. The disadvantage of this method of disposal lies in the fact that it is suitable for the disposal of such parts of nuclear device that fit to the clamping plate where they are fastened. If neutron flux sensors are to be disposed of, the problem just consists in the necessity to clamp every subject being divided separately to the camping plate, which is a time-consuming and complicated process and also one achievable with difficulties when disposing of long objects such as neutron flux sensors, also regarding radioactivity of the divided material.

Document FR 2707418 A1 describes an apparatus for cutting and disposal of in core instrumentation.

### Subject of the invention

The above-mentioned shortcomings have been eliminated or at least significantly reduced by the device for disposal of neutron flux sensors and/or thermocouples according to the present invention. This device for disposal of neutron flux sensors and/or thermocouples includes a shielding body with a cavity formed lengthwise inside, which is provided with an input opening in its lower part for inserting sensors, and the substance of the invention rests in a cutting mechanism arranged in the upper part of the cavity, comprising a cutting body and a cutting head, under which there is a receptacle designed to keep the disposed of sensors, with a channel being constructed above the input opening to lead the sensors and a feeding mechanism to feed the sensors through the channel up to the cutting mechanism located next to the input opening. According to the preferred design of the invention, the device is provided with an input opening for sensors, the axis of which runs at a distance of at least 20 mm or, more advantageously, at least 160 mm from the axis of the cutting head at the horizontal level. The preferred design of the sensor guiding channel through which the sensor is fed from the input opening to the cutting head ensures that the waste consisting of the sensor cut to pieces does not get back to channel 10 and does not clog it.

The device for disposal of neutron flux sensors and/or thermocouples according to the invention is defined in claim 1. The device according to the invention has a sensor guiding channel that includes a vertical and a bent part where the vertical part of the channel is connected to the input opening and is formed in parallel to the vertical axis of the shielding body, while the bent part is constructed so as to feed the sensor to the cutting head located above the vessel for direct transfer of the cut out parts of the sensor being disposed of into the vessel by gravity. The sensor guiding channel is designed advantageously in such a way that there is no excessive bending of the sensor led through it, which could cause either increased stress of the feeding mechanism or further complications in the course of disposal of this sensor. According to another preferred design, the device has, according to the invention, an auxiliary feeding mechanism arranged at the upper end of the sensor guiding channel for feeding the sensor to the cutting head.

The bent part of the sensor guiding channel is formed advantageously with a radius of at least 800 mm, and especially advantageously within the range of 1600 - 2000 mm, which is possible thanks to the above mentioned shift of the axes. The preferred bending of the channel corresponds to the optimal curvature of the sensor, especially after its taking out of the protective tubes block of the reactor where the sensor has already been bent.

According to yet another preferred design of the device according to the invention, the cutting head is fastened in a rotational way to facilitate throwing out the last piece of the sensor being disposed of. Even more advantageously according to the invention, both the cutting head and the auxiliary feeding mechanism of the device are fastened in a rotational way in relation to the shielding body to facilitate throwing out the last piece of the sensor being disposed of, where the auxiliary feeding mechanism is provided with a reverse motion mode for sliding the last piece of the sensor being disposed of into the vessel. Especially advantageously according to the invention, the device has the cutting mechanism formed to be taken out from the shielding body, while being fitted with a cutting body with a shield. The removable cutting mechanism is placed in the shielding body in a rotational way to ensure turning the cutting head advantageously with the auxiliary feeding mechanism. According to yet another preferred design, the device is according to the invention provided with a cutting head with two blades situated opposite each other, where the first blade is fixed firmly to the cutting body while the second blade is fixed in a movable way as against the first cutting blade, especilly advantageously in a sliding way. According to yet another preferred embodiment, the device is according to the invention provided with a cutting head having the geometry of the first blade and of the second blade designed so as to close the section of the cut-off sensor to prevent the inner filling of the sensor from falling out.

The device according to the invention is according to its preferred embodiment provided with a vessel control mechanism comprising at least one winding disk with two bands and a control mechanism. Especially advantageously is the device according to the invention provided with a vessel that is the Ap-case.

The advantages of the neutron flux sensor disposal device according to the present invention provide mainly for an increased capacity of the device, location of the replacement vessel for storage and transport of the disposed of sensors directly in the device, and a possibility of an entirely automatized process of sensor disposal.

Thanks to process automation, the device operator may perform just checking operations. All relevant elements of the device are provided with a manual backup and electronic check in the course of disposal. The device is advantageously provided with remote control and a camera system making it possible for the operator to step aside within a safe distance if necessary. The device operator only performs checking operations and inserts sensors to be disposed of into the device. As the upper part of the sensor can be handled manually for not being radioactive, the operator is not threatened in any way during the manipulation process. In addition, it is possible to control the device from more places if necessary using a remote control.

### Explanation of the drawings

The example of the embodiment of the proposed solution is described with references to drawings:
- Fig. 1: General outside view of an advantageous embodiment of the device for disposal of sensors according to the invention, showing the external device of the shielding body
- Fig. 2: General outside view of an advantageous embodiment of the device for disposal of sensors from Fig. 1 from the other side, showing the external device of the shielding body
- Fig. 3: Partial view of the cutting device for disposal of sensors from Fig. 1 in a sectional view, showing a detail of the cutting head including video cameras for checking the sensor disposal process
- Fig. 4: View of the device for disposal of sensors from Fig. 1 in a sectional view, showing the sensor path inside the device
- Fig. 5: Partial view of the device for disposal of sensors from Fig. 1 in a sectional view, showing a detail of the cutting head
- Fig. 6: View of the device for disposal of sensors from Fig. 1 in a sectional view, turned by 90° as against of Fig. 4, showing the fitting of the cutting head, auxiliary feeding mechanism, winding mandrel, and closing mechanism
- Fig. 7: Partial view of the device from Fig. 1 in a sectional view, showing the take-out mechanism of the vessel for storage of pieces of disposed-of sensors

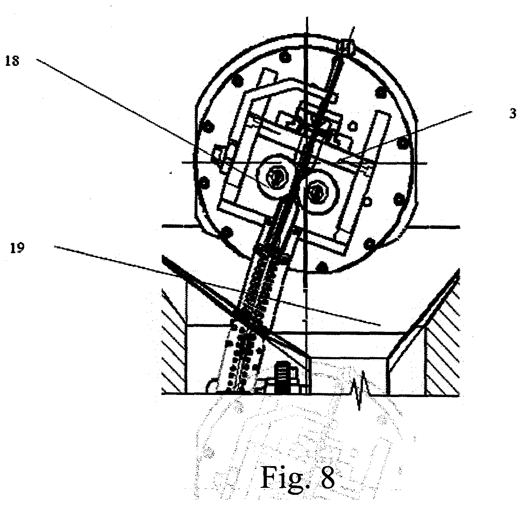

- Fig. 8: Detail of the cutting mechanism

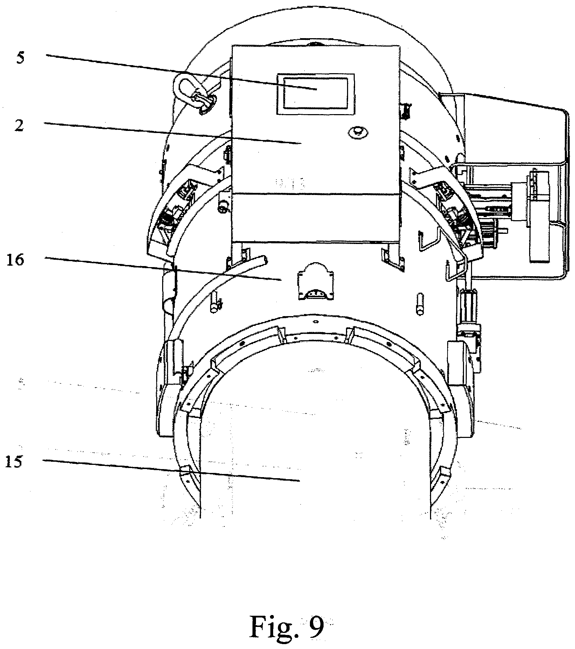

- Fig. 9: Setting of the device on the transport container according to the invention
- Fig. 10a: View of the device detail from Fig. 4 with the cutting mechanism slightly turned
- Fig. 10b: Corresponds to the view from Fig. 10a with an arrow indicating the direction of sliding the last piece of sensor out of the cutting mechanism
- Fig. 11: Represents a detail of the control mechanism for lowering and taking out the vessel from Fig. 7

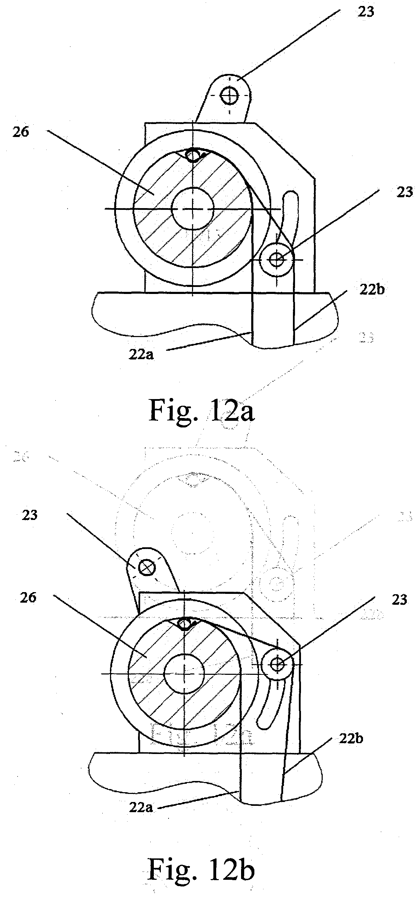

- Fig. 12a: Represents a view of the detail of the lever part of the control mechanism in the first position
- Fig. 12b: Represents a view of the detail of the lever part of the control mechanism in the second position

### Invention implementation examples

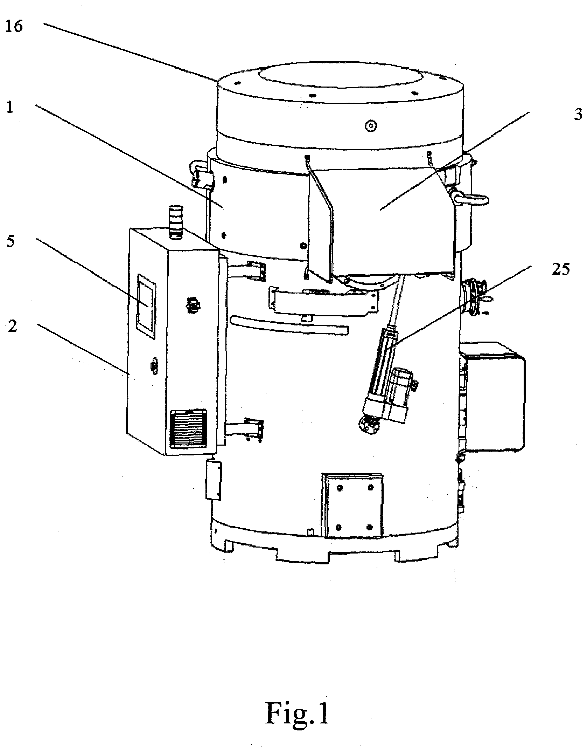

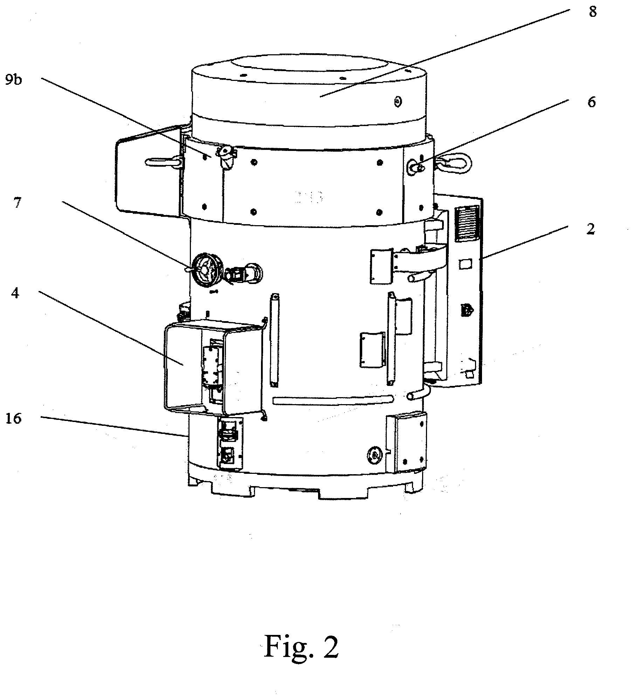

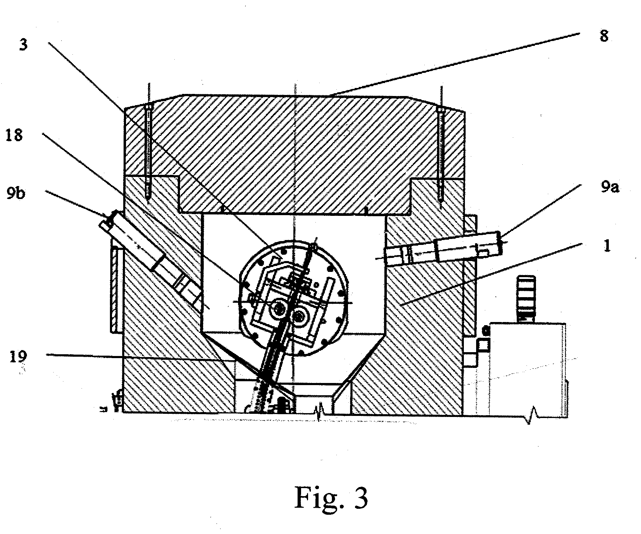

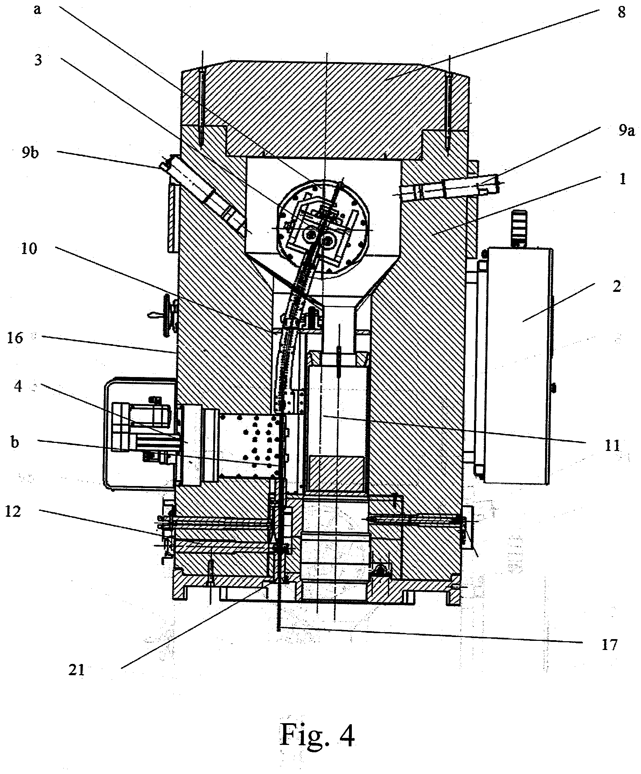

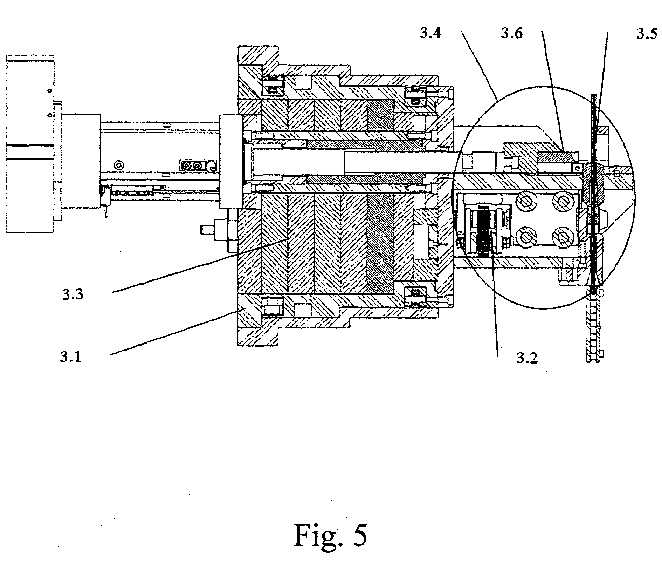

Figures 1 and 2 show various views of possible variants of the device according to the invention for disposal of the neutron flux sensors or thermocouples, hereinafter referred to both as sensors, The device for disposal of sensors according to this invention consists of at least the following parts: shielding body 1, cutting mechanism 3, feeding mechanism 4, and receptacle 11 to store sensors cut to pieces. These mechanisms are partially placed on the outer part of the shielding body 1 but the majority of them are arranged inside it. The shielding body 1 is designed in such a way that, through its mass, it screens out the dangerous radiation emitted from the sensors being disposed of. The shielding body 1 has advantageously an oblong cylindrical shape and includes a longitudinal cavity 20. In the upper part of the cavity 20, which is extended in the sample design, the cutting mechanism 3 is arranged; see Fig. 3 and 4. The feeding mechanism 4 and the receptacle 11 to keep sensors cut to pieces are arranged in the cavity 20 of the shielding body 1 under the cutting mechanism 3. In the lower part of the cavity 20, the shielding body 1 is provided with an opening 21 for sliding the disposed sensors in. The channel 10 is connected to the opening 21 to lead sensors towards the cutting mechanism 3, and the feeding mechanism 4 is arranged next to the channel 10 above the opening 21. The feeding mechanism 4 includes at least one feeding roller (not shown here) located placed inside the shielding body so as to facilitate feeding the sensors slid through the opening 21 along the channel 10 to the cutting mechanism 3. The device for disposal of sensors according to the invention also advantageously includes an auxiliary feeding mechanism 18 arranged at the upper end of the channel 10 under the cutting mechanism 3. The auxiliary feeding mechanism 18 ensures feeding sensors towards the cutting blades 3.5, 3.6 of the cutting mechanism 3 (Fig. 5). The auxiliary feeding mechanism 18 also includes at least one feeding roller designed to feed sensors to the cutting mechanism 3. The section of the feeding rollers of both the feeding mechanism 4 and the auxiliary feeding mechanism 18 advantageously corresponds to the shape of the sensor being fed to ensure reliable feeding to the cutting device. The drive of the feeding rollers is advantageously located on the outer side of the shielding body and is formed especially advantageously by a servomotor or a similar servomechanism making it possible to control reliably the feeding of neutron flux sensors to the cutting mechanism 3. The drive of the feeding rollers of the feeding mechanism 4 or of the auxiliary feeding mechanism 18is, according to an especially preferred design, completed with a gear box (not shown) for precise setting of the required speed of feeding of the sensors being disposed of. The drive is advantageously supplied by a servo-amplifier controlled by the parent control system. The above-described design of the feeding mechanism 4 as well as of the auxiliary feeding mechanism 18 is described as especially preferred but it is used mainly for illustrative purposes and in no case it is intended so that it should reduce the scope of the invention to the described design. It is also possible to use other types of feeding mechanisms, which will ensure fastening the sensor slid through into the device for disposal according to the invention and its reliable transport to the cutting mechanism 3.

Fig. 5 shows a detail of a preferred design of the cutting mechanism 3 for the device for disposal of sensors according to the invention. This cutting mechanism 3 is especially advantageously formed as an independent block removable from the shielding body 1, and includes the cutting body 3.1 with a transmission part 3.2, a shield 3.3, and a cutting head 3.4. The shield 3.3 provides the shielding properties of the cutting mechanism 3 corresponding to those of the shielding body 1 so that it is possible to remove the cutting mechanism 3 without disturbing the shielding against radioactive radiation in any way. The cutting head 3.4, according to this preferred design, comprises two blades 3.5, 3.6 situated against each other, with the first blade 3.5 being fixed to the cutting body 3.1 whereas the second blade 3.6 being fastened in a movable way in relation to the first blade 3.5, especially advantageously in a sliding way, e.g.in such a way that it is arranged on a sliding bed led in sliding rails fastened to the cutting body 3.1 of the cutting mechanism 3. Again, this described version of the cutting mechanism 3 is only provided as an example for illustrative purposes. However, the substance of the invention also enables using other suitable form of the cutting mechanism, e.g. a rocking one, etc. The above-mentioned design of cutting mechanism 3, therefore, should be understood as a preferred one but not restricting in any way. The cutting mechanism 3 is arranged in a rotational way in the shielding body 1 to enable turning the cutting head 4 with the auxiliary feeding mechanism when pushing the last part of the sensor out to the receptacle 11.

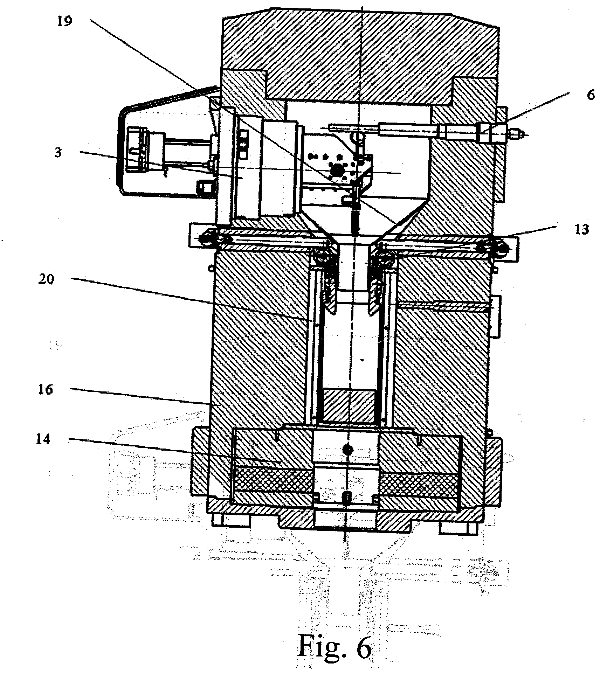

Fig. 4 and 6 show a sectional view of the device according to the invention from Fig. 1, being turned by 90° towards each other. In its lower part above the opening 21 and in the channel 10, the device according to the invention is, advantageously constructed so as to be at least by 0,5mm bigger than the diameter of the sensor being disposed of to ensure reliable guidance of the sensor; in the sample design, the guidance diameter is 8mm for a sensor of 7.5 mm in outer diameter. At the opening 21, the device according to the invention is advantageously provided with a lead-in cone to facilitate leading the sensor in the opening 21. In the sample design shown, the sensor, after being slid through the opening 21 into the cavity 20 in the shielding body 1, goes through a safety mechanism to prevent the sensor from slipping out of the device and then it goes through the feeding mechanism 4 to the channel 10. The channel 10 is formed so that the cutting head 3.4 adapted at its upper end is arranged essentially above the receptacle 11. In the sample design of the device for disposal of sensors according to this invention, the channel 10 includes both a straight and a bent part. It is obvious for an expert that the channel 10 can also be shaped in other way to place the cutting mechanism 3 or the cutting head 3.4 above the receptacle 11. The bent part of the channel 10 is especially advantageously formed with a radius from approximately 1600 mm to 2000 mm and misaligned in relation to the axis and the inlet opening 21 to ensure that the cutting head 3.4 is located above the receptacle 11 and outside the channel 10. The cutting head 3.4 is especially advantageously located so that its vertical axis is placed at the distance of at least 20 but advantageously at least 160 mm from the axis and the inlet opening 21, thanks to which it is possible to form the channel 10 with a suitable radius of curvature to ensure that the sensor is submitted to a bending stress as low as possible for the reasons mentioned above. Since the cutting head 3.4 of the cutting mechanism 3 is arranged directly above the receptacle 11, all the sensor cutting waste falls directly into the receptacle 11. The appropriate shape of the channel 10 that enters the cutting head 3.4 at an angle and the positioning of the cutting head 3.4 above the receptacle 11 also minimize the quantity of the cuttings that could fall back into the sensor guiding channel 10, which could restrict or even prevent the introduction and sliding of sensors through the channel 10. But naturally, it is also possible to design a channel with a different radius of curvature, especially with a bigger one that will bend the sensor less. The auxiliary feeding mechanism 18 is arranged advantageously in front of the sensor input to the cutting mechanism 3 from the channel 10.

The pressure forces of the feeding rollers of the feeding mechanism 4 and of the auxiliary feeding mechanism 18 are set advantageously by pre-loading the disk springs arranged inside the roller, for instance. To change the pressure force of the feeding roller, e.g. when releasing the sensor, the feeding roller is connected in an appropriate way to an actuator making it possible to change the pressure force through which the feeding rollers act on the sensor. Especially advantageously the option to change pressure is designed for the feeding roller of the feeding mechanism 4 only to facilitate inserting the sensor safely into the device according to the invention.

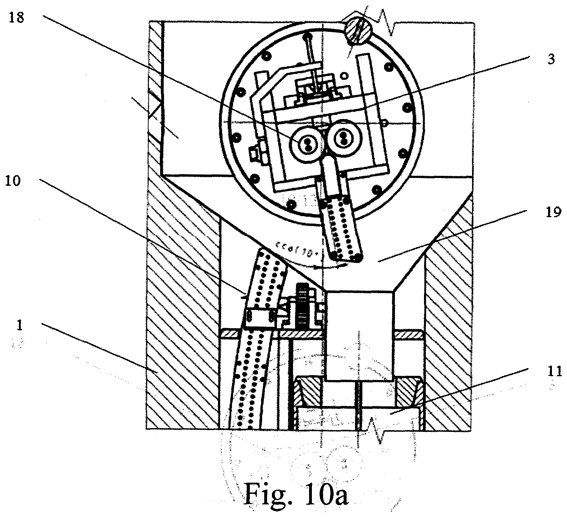

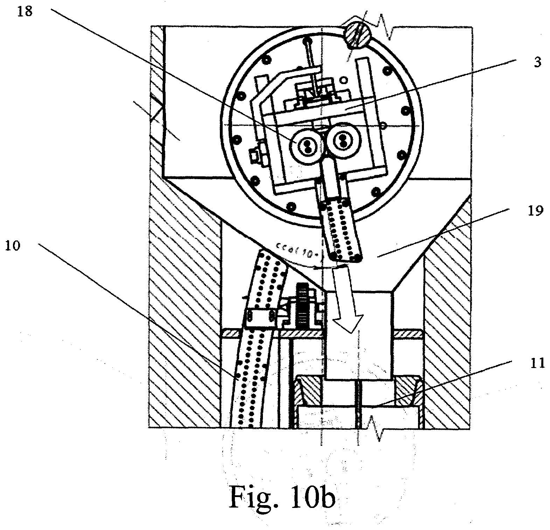

The shape of both blades 3.5, 3.6 of the cutting mechanism 3 is especially advantageously designed so as to close the jacket simultaneously when cutting the sensor, whereby preventing parts of the sensor from falling into the jacket. The cutting mechanism 3 and the shielding body 1 are designed especially advantageously so as to facilitate dismantling the blades 3.5, 3.6 without having to dismantle the whole cutting mechanism 3 out of the shielding body 1, e.g. by opening the upper part of the shielding body 1. In the example shown, the design is especially preferred as after the removal of the cover 8 it is possible to dismantle the fastening elements of the blades 3.5, 3.6, and by turning subsequently the cutting head 3.4 or the entire cutting mechanism 3 by approximately 180° the released blades 3.5, 3.6 that are radioactive fall down into to the receptacle 11 by gravity. The receptacle 11 is especially advantageously formed by the so-called AP-case that is used directly to store radioactive material, but it can be replaced by any other suitable vessel. To enable easy disposal of the last piece of the cut up sensor that remains in the cutting mechanism 3 after cutting off the last part of the sensor, at least the cutting head 3.4 is placed in a rotational way. According to the preferred design shown, the entire cutting mechanism 3 including the auxiliary feeding mechanism 18 is fastened in the shielding body 1 in a rotational way and connected to the servo-drive 25 by which it is turned when throwing off the last piece of the sensor and possibly also the released blades 3.5, 3.6 into the receptacle 11. As shown in Fig. 10a, when disposing of the last part of the sensor, the cutting mechanism 3 with the cutting head 3.4 and with a part of the channel 10 will be turned by means of the servo-drive 25 by approximately 10°. In the shown design example, the servo-drive 25 is located on the outer side of the shielding body 1 to facilitate the service works; see Fig. 1. Then, the auxiliary feeding mechanism 18 will perform a reverse motion to slide out the last piece of the sensor through the bottom of the cutting head 3.4 in the direction of the arrow as shown in Fig. 10b into the receptacle 11. After sliding out the last piece of the sensor, the cutting mechanism 3 with the cutting head 3.4 will return to the initial position.

The cavity 20 of the shielding body 1 of the device for disposal of neutron flux sensors is advantageously provided with at least two video-cameras 9a, 9b for visual inspection of the disposal process; see Fig. 3. The video-cameras 9a, 9b are placed in cases resistant to radioactivity; see Fig. 4. The first video-camera 9a is arranged in the upper part of the cutting mechanism 3 to monitor the sensor-cutting process. The second video-camera 9b is located so as to monitor the dropping of the cut-off parts of the sensor down into the receptacle 11. Especially advantageously are the video-cameras 9a, 9b provided with an illumination unit and focused to a fixed distance corresponding to the distance of the video-cameras 9a, 9b from the place being monitored. This prevents any potential undesirable defocusing of the image. The video signal from the video-cameras can be displayed advantageously on the control monitor 5 on the main switchboard 2 or it is possible to record the video if required.

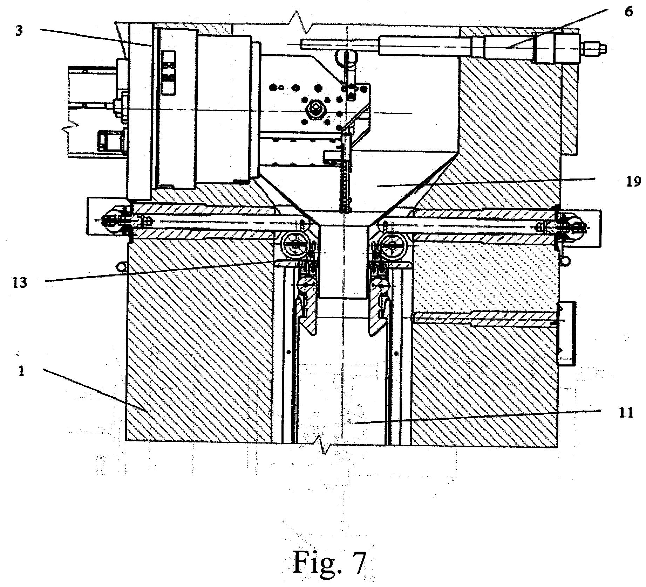

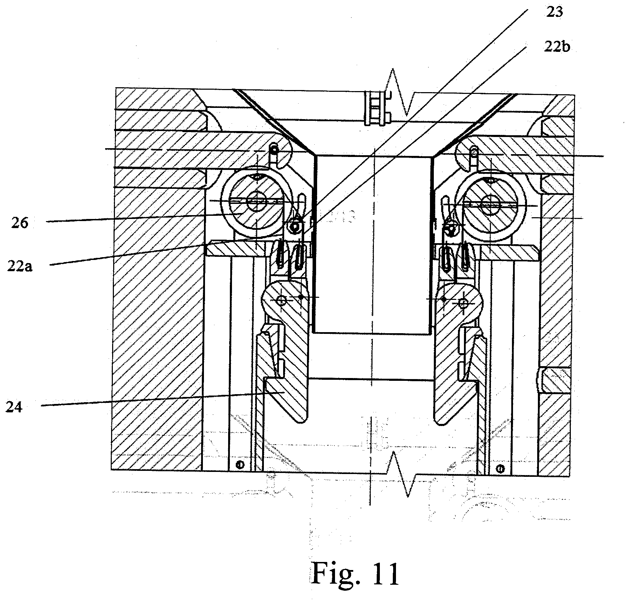

As already mentioned above, the receptacle 11 in the design shown is the so-called Ap - case that is used for further manipulation and storage of radioactive materials - sensors cut to pieces in this case. Inside the shielding body 1, a funnel-shaped chute 19is arranged advantageously under the cutting mechanism 3, see Fig. 7, to route all the parts of the sensor being disposed of to the receptacle 11 in a reliable way. Under this chute 19,a control mechanism 13 is located to pull in/lower the receptacle 11. In the sample design of the device according to the invention as shown in Fig. 11, this control mechanism 13 is provided with a flange and two tapes 22 with hooks 24 at the end tobe connected with the inner shoulder of the receptacle 11. Both hooks 24 are held with two tapes or ribbons 22. This tape 22 is designed to hold the filled-in receptacle 11. The tapes 22 are advantageously wound up onto their respective drums to pull the receptacle 11 into the shielding body 1 or, vice versa, lower the receptacle 11 out of the shielding body 1. The capture or release of the receptacle 11 is controlled advahtageously by means of a pair of control tapes with hooks 24; see Fig. 11. Both the bearing tape 22a and the control tape 22b are wound onto a single drum simultaneously. When releasing the receptacle 11, the control lever 23 with a pulley will move the control tape 22b, which is connected with the hook 24 in an eccentric way in the direction of arrow, whereby lifting the hook 24 slightly and releasing it from the receptacle 11. With this move of the tape 22b, the hook24 will be unlocked and the flange disconnected from the receptacle 11. The design of the control mechanism as decribed above is only used to illustrate the manipulation of the receptacle 11 inside the shielding body 1. There are other designs possible, naturally, and the described control mechanism should not be construed in any restricting sense in relation to the substance of the invention.

The device for disposal of sensors according to the invention is advantageously provided with a backup mechanism 7 for manual lowering of the filled-in receptacle 11 down into a transport container in case of a power outage, for instance.

In its lower part under the space for receptacle 11, the shielding body 1 is provided with a closing mechanism 14, see Fig. 6, which advantageously comprises two closing shielding blocks hereinafter referred to as slides. These slides allow to close the inner space of the shielding body 1 after pulling the receptacle 11 into it, whereby screening off the inserted receptacle 11. At the same time, the slides are used as a mechanical block against the falling of the receptacle 11 out of the shielding body 1. The motion of the slides takes place advantageously by means of a righthand and left-hand-threaded screw for using a single servomotor with a gearbox only. The servomotor is power supplied through a servo-booster controlled by the parent control system. The slides are connected with the motion screw by means of flanges. The motion screw is placed in enclosed anti-friction bearings. If the servo-drive is out of function, it is possible to connect a manual drive at the other end of the motion screw to open or close the slides manually. The open or closed position is signalled by means of end switches in both positions.

The device 16 according to the invention is most advantageously provided with ar backup sensor-disposal mechanism to be used in case of a non-standard situation, such as power outage. The backup mechanism does not need to be a permanent part of the device 16 for disposal of sensors according to this invention. The backup mechanism comprises advantageously of a rotary shaft 6 operated as a winding mandrel to wind up the sensor in the shielding body 1 of the device according to the invention. The side of the shaft 6 that winds up the sensor is provided with a groove into which, on the one hand, the end of the sensor is attached and, on the other, which makes it possible to pull down the completely wound-up sensor from the shaft 6 when pulling it out from the device. The outer side of the shaft 6 is designed for connection with a crank mechanism used to rotate the shaft 6. This part of the shaft 6 protrudes from the shielding body 1.

### Description of operation of the device for disposal of sensors according to the invention:

At first, the device for disposal of sensors is taken to and set up at the required sensor outlet from nuclear reactor; the sensors to be disposed of are pulled out of these outlets placed on a flat circular plate located on the protective tubes block (not shown here). To insert the receptacle 11, the entire device 16 for disposal of sensors is placed on a transport container or a stand that will enable inserting this receptacle into the device without the need of a transport container.

The device operator inserts the sensor 17 to be disposed of by means of the device 16 into the input opening 21; see figure 4. After inserting the sensor 17 through the opening 21 into the cavity 20, the sensor is captured by the feeding mechanism 4 that passes the sensor through the channel 10 to the auxiliary feeding mechanism 18, which passes the sensor to the cutting head 3.4. The cutting mechanism 3 measures the set length of the sensor 17, advantageously 10 to 14 cm, while the second blade 3.6 moves towards the first blade 3.5 to cut off the protruded piece of the sensor, in the above-mentioned preferred length of 10 to 14 cm and, at the same time, closes the tube of the sensor to prevent the inner filling of the cut-off part of the sensor 17, i.e. the wires of the individual measuring elements or thermocouples, from falling out. The cut-off part of the sensor 17 falls by gravity into the receptacle 11, which is the Ap-case in this case. As the last piece of the sensor 17 could remain in the cutting mechanism 3, the cutting mechanism 3 will turn slightly by approximately 10° in the shielding body 1 arid the auxiliary feeding mechanism 18 performs a reverse motion to push out the last piece of the sensor into the receptacle 11.

If a non-standard situation occurs, see above, the above-described backup mechanism will be used; see figure 5. The rotary shaft is inserted manually or using a crane from outside of the device - for disposal of sensors through the wall of the shielding body 1. After sliding in the mandrel, the part of the shaft onto which the sensor is to be wound on is arranged above the cutting head. The sensor is inserted through the groove in the shaft 6 and the shaft 6 is rotated using the crank mechanism. This causes the sensor being disposed of to be wound on the shaft 6. After finishing the winding process, the shaft 6 is taken out from the shielding body 1, whereby the wound-on sensor gets released and falls down into the receptacle 11.

### Industrial applicability

The practical application of the proposed solution is intended for disposal of neutron flux sensors and thermocouples, especially in the VVER 1000-type reactors.

### List of figure marks

- 1: Shielding body
- 2: Main switchboard
- 3: Cutting mechanism
3.1 Cutting body
3.2 Transmission part
3.3 Shielding wall
3.4 Cutting head
3.5 First blade
3.6 Second blade
- 4: Feeding mechanism
- 5: Monitor
- 6: Winding mandrel
- 7: Manual backup control for the receptacle pulling-in / lowering mechanism
- 8: Cover
- 9a: Video-camera
- 9b: Video-camera
- 10: Sensor guiding channel
- 11: Receptacle
- 12: Safety roller
- 13: Receptacle pulling-in / lowering mechanism
- 14: Closing mechanism
- 15: Transport container
- 16: Device for disposal of sensors
- 17: Sensor being disposed of
- 18: Auxiliary feeding mechanism
- 19: Funnel-shaped chute
- 20: Cavity
- 21: Sensor input opening
- 22a: Bearing tape
- 22b: Control tape
- 23: Control lever with pulley
- 24: Hook
- 25: Servo-drive of cutting mechanism
- 26: Winding drum

- a: Vertical axis of the cutting head
- b: Vertical axis of the input sensor opening

## Claims

1. Device for disposal of neutron flux sensors and/or thermocouples comprising a shielding body (1) with a longitudinal cavity (20) inside, the shielding body (1) being provided with an input opening (21) in its lower part to allow insertion of said sensors and/or thermocouples,
wherein a cutting mechanism (3) is arranged in an upper part of the cavity (20), said cutting mechanism (3) comprising a cutting body (3.1) and a cutting head (3.4); a receptacle (11) is arranged within the cavity (20) below said cutting mechanism (3) to store said sensors and/or thermocouples being disposed, said cutting mechanism (3) is arranged above the receptacle (11) to allow a direct transfer of the cut-off parts of the sensor and/or thermocouples into the receptacle (11) by gravity; wherein a channel (10) is provided above the input opening (21);
the device being **characterized in that** said channel (10) has a vertical part and a bent part, said vertical part of the channel (10) being formed in parallel to the vertical axis of the shielding body (1) and said bent part of the channel (10) being provided to supply the sensors and/or thermocouples to the cutting mechanism (3),
and wherein a feeding mechanism (4) is provided at the input opening (21) to feed the sensors and/or thermocouples from the input opening (21) through the channel (10) to the cutting mechanism (3).

2. Device according to claim 1, **characterized by** an auxiliary feeding mechanism (18) being arranged at the upper end of the channel (10) to feed the sensor to the cutting head (3.4).

3. Device according to claim 1 or 2, **characterized in that** the cutting head (3.4) is rotationally attached so as to facilitate throwing the last piece of the sensor being disposed.

4. Device according to claim 1, **characterized in that** the cutting mechanism (3) with the cutting head (3.4) is provided with an auxiliary feeding mechanism (18) to feed sensors to the cutting head (3.4), wherein said cutting mechanism (3) is arranged in a rotational way in the shielding body (1) and the auxiliary feeding mechanism (18) is provided with a reverse motion function to push out the last piece of the sensor being disposed of into the receptacle (11).

5. Device according to claim 4, **characterized in that** the cutting mechanism (3) is arranged removably from the shielding body (1), wherein the cutting body (3.1) is provided with a shielding wall (3.3).

6. Device according to any of claims 1 to 5, **characterized in that** the cutting head (3.4) is provided with two blades arranged opposite each other (3.5, 3.6), the first blade (3.5) is fixed to the cutting body (3.1) and the second blade (3.6) is movably attached in respect of the first cutting blade (3.5).

7. Device according to claim 6, **characterized in that** the first blade (3.5) and the second blade (3.6) are provided with a geometry enabling to close the section of the cut-off sensor in order to prevent the inner filling of the sensor from falling out.

8. Device according to any of claims 1 to 7, **characterized in that** the vertical axis (b) of the input opening (21) is located at a distance of at least 160 mm from the vertical axis (a) of the cutting head (3.4).

9. Device according to any of claims 1 to 8, **characterized in that** it is provided with a control mechanism (13) for lowering and pulling out the receptacle (11), comprising at least one winding drum (26) with two tapes, one of said tapes being a bearing tape (22a) connected with a hook (24) and the second tape being a control tape (22b) connected eccentrically to the hook (24) and led over the pulley of the control lever (23) to release the hook (24) from the receptacle (11) .

## Patentansprüche

1. Vorrichtung zur Entsorgung von Neutronenflusssensoren und/oder Thermoelementen, die einen Abschirmkörper (1) mit einem länglichen Hohlraum (20) im Inneren umfasst, wobei der Abschirmkörper (1) an seinem unteren Teil mit einer Eingangsöffnung (21) versehen ist, um ein Einführen der Sensoren und/oder Thermoelemente zu ermöglichen, wobei ein Schneidmechanismus (3) in einem oberen Teil des Hohlraums (20) angeordnet ist, der Schneidmechanismus (3) einen Schneidkörper (3.1) und einen Schneidkopf (3.4) umfasst; ein Behälter (11) im Inneren des Hohlraums (20) unter dem Schneidmechanismus (3) angeordnet ist, um die entsorgt werdenden Sensoren und/oder Thermoelemente aufzubewahren, wobei der Schneidmechanismus (3) über dem Behälter (11) angeordnet ist, um einen direkten Transfer der abgeschnittenen Teile des Sensors und/oder der Thermoelemente in den Behälter (11) durch die Schwerkraft zu ermöglichen;
wobei ein Kanal (10) über der Eingangsöffnung (21) vorgesehen ist,
wobei die Vorrichtung **dadurch gekennzeichnet ist, dass** der Kanal (10) einen vertikalen Teil und einen gebogenen Teil aufweist, der vertikale Teil des Kanals (10) parallel zur vertikalen Achse des Abschirmkörpers (1) gebildet ist und der gebogene Teil des Kanals (10) vorgesehen ist, um dem Schneidmechanismus (3) die Sensoren und/oder Thermoelemente zuzuführen,
und wobei ein Vorschubmechanismus (4) an der Eingangsöffnung (21) vorgesehen ist, um die Sensoren und/oder Thermoelemente von der Eingangsöffnung (21) durch den Kanal (10) zum Schneidmechanismus (3) vorzuschieben.

2. Vorrichtung nach Anspruch 1, **dadurch gekennzeichnet, dass** ein Hilfsvorschubmechanismus (18) am oberen Ende des Kanals (10) angeordnet ist, um den Sensor zum Schneidkopf (3.4) vorzuschieben.

3. Vorrichtung nach Anspruch 1 oder 2, **dadurch gekennzeichnet, dass** der Schneidkopf (3.4) drehbar befestigt ist, um ein Werfen des letzten Stücks des entsorgt werdenden Sensors zu erleichtern.

4. Vorrichtung nach Anspruch 1, **dadurch gekennzeichnet, dass** der Schneidmechanismus (3) mit dem Schneidkopf (3.4) mit einem Hilfsvorschubmechanismus (18) versehen ist, um Sensoren zum Schneidkopf (3.4) vorzuschieben, wobei der Schneidmechanismus (3) auf drehbare Weise im Abschirmkörper (1) angeordnet ist und der Hilfsvorschubmechanismus (18) mit einer Rückwärtsbewegungsfunktion versehen ist, um das letzte Stück des entsorgt werdenden Sensors in den Behälter (11) hinaus zu drücken.

5. Vorrichtung nach Anspruch 4, **dadurch gekennzeichnet, dass** der Schneidmechanismus (3) aus dem Abschirmkörper (1) entfernbar angeordnet ist, wobei der Schneidkörper (3.1) mit einer Abschirmwand (3.3) versehen ist.

6. Vorrichtung nach einem der Ansprüche 1 bis 5, **dadurch gekennzeichnet, dass** der Schneidkopf (3.4) mit zwei Klingen versehen ist, die einander gegenüberliegend angeordnet sind (3.5, 3.6), wobei die erste Klinge (3.5) am Schneidkörper (3.1) befestigt ist und die zweite Klinge (3.6) beweglich in Bezug auf die erste Schneidklinge (3.5) angeordnet ist.

7. Vorrichtung nach Anspruch 6, **dadurch gekennzeichnet, dass** die erste Klinge (3.5) und die zweite Klinge (3.6) mit einer Geometrie versehen sind, die ein Schließen des Abschnitts des abgeschnittenen Sensors ermöglicht, um zu verhindern, dass die innere Füllung des Sensors herausfällt.

8. Vorrichtung nach einem der Ansprüche 1 bis 7, **dadurch gekennzeichnet, dass** sich die vertikale Achse (b) der Eingangsöffnung (21) in einem Abstand von mindestens 160 mm von der vertikalen Achse (a) des Schneidkopfs (3.4) befindet.

9. Vorrichtung nach einem der Ansprüche 1 bis 8, **dadurch gekennzeichnet, dass** sie mit einem Steuermechanismus (13) zum Senken und Herausziehen des Behälters (11) versehen ist, umfassend mindestens eine Wickeltrommel (26) mit zwei Bändern, wobei eines der zwei Bänder ein Trägerband (22a) ist, das mit einem Haken (24) verbunden ist, und das zweite Band ein Steuerband (22b) ist, das exzentrisch mit dem Haken (24) verbunden ist und über die Rolle des Steuerhebels (23) geführt ist, um den Haken (24) vom Behälter (11) zu lösen.

## Revendications

1. Dispositif pour la mise au rebut de capteurs et/ou thermocouples à flux de neutrons comprenant un corps de protection (1) avec une cavité longitudinale (20) à l'intérieur, le corps de protection (1) comportant une ouverture d'entrée (21) dans sa partie inférieure pour autoriser une introduction desdits capteurs et/ou thermocouples,
un mécanisme de coupe (3) étant placé dans une partie supérieure de la cavité (20), ledit mécanisme de coupe (3) comprenant un corps de coupe (3.1) et une tête de coupe (3.4) ; un réceptacle (11) étant placé à l'intérieur de la cavité (20) au-dessous dudit mécanisme de coupe (3) pour stocker lesdits capteurs et/ou thermocouples qui sont mis au rebut, ledit mécanisme de coupe (3) étant placé au-dessus du réceptacle (11) pour autoriser un transfert direct des parties découpées des capteurs et/ou thermocouples dans le réceptacle (11) par gravité ;
un canal (10) étant prévu au-dessus de l'ouverture d'entrée (21),
le dispositif étant **caractérisé par le fait que** ledit canal (10) a une partie verticale et une partie courbée, ladite partie verticale du canal (10) étant formée parallèlement à l'axe vertical du corps de protection (1), et ladite partie courbée du canal (10) étant prévue pour acheminer les capteurs et/ou thermocouples vers le mécanisme de coupe (3),
et un mécanisme d'alimentation (4) étant prévu à l'ouverture d'entrée (21) pour alimenter les capteurs et/ou thermocouples de l'ouverture d'entrée (21), à travers le canal (10), au mécanisme de coupe (3).

2. Dispositif selon la revendication 1, **caractérisé par** un mécanisme d'alimentation auxiliaire (18) qui est placé à l'extrémité supérieure du canal (10) pour alimenter le capteur à la tête de coupe (3.4).

3. Dispositif selon la revendication 1 ou 2, **caractérisé par le fait que** la tête de coupe (3.4) est fixée de manière rotative de façon à faciliter le lancer de la dernière pièce du capteur qui est mis au rebut.

4. Dispositif selon la revendication 1, **caractérisé par le fait que** le mécanisme de coupe (3) avec la tête de coupe (3.4) comporte un mécanisme d'alimentation auxiliaire (18) pour alimenter des capteurs à la tête de coupe (3.4), ledit mécanisme de coupe (3) étant disposé de manière rotative dans le corps de protection (1) et le mécanisme d'alimentation auxiliaire (18) comportant une fonction de mouvement inverse pour pousser dans le réceptacle (11) la dernière pièce du capteur qui est mis au rebut.

5. Dispositif selon la revendication 4, **caractérisé par le fait que** le mécanisme de coupe (3) est disposé de manière amovible du corps de protection (1), le corps de coupe (3.1) comportant une paroi de protection (3.3).

6. Dispositif selon l'une quelconque des revendications 1 à 5, **caractérisé par le fait que** la tête de coupe (3.4) comporte deux lames placées l'une à l'opposé de l'autre (3.5, 3.6), la première lame (3.5) est fixée au corps de coupe (3.1) et la seconde lame (3.6) est fixée de manière mobile par rapport à la première lame de coupe (3.5).

7. Dispositif selon la revendication 6, **caractérisé par le fait que** la première lame (3.5) et la seconde lame (3.6) ont une géométrie permettant de fermer la section du capteur découpé afin d'empêcher le remplissage interne du capteur de tomber.

8. Dispositif selon l'une quelconque des revendications 1 à 7, **caractérisé par le fait que** l'axe vertical (b) de l'ouverture d'entrée (21) se situe à une distance d'au moins 160 mm de l'axe vertical (a) de la tête de coupe (3.4).

9. Dispositif selon l'une quelconque des revendications 1 à 8, **caractérisé par le fait qu'**il comporte un mécanisme de commande (13) pour abaisser et retirer le réceptacle (11), comprenant au moins un tambour d'enroulement (26) ayant deux bandes, l'une desdites bandes étant une bande de roulement (22a) reliée à un crochet (24) et la seconde bande étant une bande de contrôle (22b) reliée de manière excentrique au crochet (24) et guidée sur la poulie du levier de commande (23) pour libérer le crochet (24) vis-à-vis du réceptacle (11).
